# EUROPÄISCHE PATENTANMELDUNG

(11) **EP 3 513 764 A1**
(43) Veröffentlichungstag der Anmeldung: **24.07.2019**
(21) Anmeldenummer: 18152682.3
(22) Anmeldetag: 22.01.2018
(51) Int. Cl.: A61C 9/00, A61C 13/00, A61C 7/00, A61C 7/08

(54) **ANORDNUNG ZUR HERSTELLUNG VON MEHREREN UNTERSCHIEDLICH AUSGEFORMTEN ZAHNSCHIENEN**

(71) Anmelder: Amann Girrbach AG, 6842 Koblach (AT)
(72) Erfinder: Amann, Oliver, 6844 Altach (AT); Noack, Falko, 6822 Satteins (AT)
(74) Vertreter: Fechner, Thomas

(57) **Zusammenfassung**

Anordnung zur Herstellung von mehreren unterschiedlich ausgeformten Zahnschienen (1) für eine kieferorthopädische Behandlung eines Patienten, wobei die Anordnung mehrere Zahnstümpfe (2) aufweist und die Zahnstümpfe (2) jeweils eine Zahnkrone (3) zur Ausformung von Zahnkronenabdrücken (4) in den Zahnschienen (1) aufweisen und die Anordnung zusätzlich mehrere Tragkörper (5) aufweist, wobei jeder der Tragkörper (5) für die, vorzugsweise für jeden der, Zahnstümpfe (2) zumindest einen Adapter (6) zur lösbaren Befestigung des, vorzugsweise jeweiligen, Zahnstumpfes (2) auf dem jeweiligen Tragkörper (5) aufweist. (Fig. 5)

## Beschreibung

Die vorliegende Erfindung betrifft eine Anordnung zur Herstellung von mehreren unterschiedlich ausgeformten Zahnschienen für eine kieferorthopädische Behandlung eines Patienten. Weiters betrifft die Erfindung auch ein Verfahren zur Herstellung von mehreren unterschiedlich ausgeformten Zahnschienen und ein Computerprogramm.

Beim Stand der Technik ist es in der Kieferorthopädie zur Korrektur von Fehlstellungen von Zähnen im Gebiss eines Patienten bekannt, eine Vielzahl von Zahnschienen zu verwenden, welche über einen längeren Zeitraum nacheinander in den Mund eines Patienten eingesetzt werden, um so die Zahnstellungen ausgehend von der Ausgangssituation vor der Behandlung nach und nach in eine Endsituation zu überführen, der dem Behandlungsziel entspricht. Um auf die Zähne einwirken zu können, weisen die Zahnschienen Zahnkronenabdrücke der Zähne des jeweiligen Patienten auf. Wenn die Zahnschienen auf die Zahnkronen des Patienten aufgesteckt sind, liegen die Zahnkronen in den Zahnkronenabdrücken der Zahnschienen. Durch die Änderung der Position und/oder Ausrichtung der Zahnkronenabdrücke relativ zueinander von Zahnschiene zu Zahnschiene können bei der entsprechenden Behandlung die Positionierung und die Ausrichtung der natürlichen Zähne des Patienten relativ zueinander in der gewünschten Art und Weise korrigiert werden.

Eine Möglichkeit der Herstellung der Vielzahl von Zahnschienen für eine solche kieferorthopädische Behandlung eines Patienten ist in der US 5,975,893 A beschrieben. Bei dieser Vorgehensweise gemäß des Standes der Technik wird zunächst die Ausgangssituation erfasst, indem die entsprechenden Kiefer mit den dort angeordneten natürlichen Zähnen im Mund des Patienten gescannt werden oder zunächst ein entsprechender Abdruck hergestellt wird, welcher dann außerhalb des Mundes des Patienten gescannt wird. Auf Basis des so erzeugten digitalen Modells der Ausgangssituation im Mund des Patienten wird dann die gewünschte Endsituation digital modelliert. Zusätzlich wird eine entsprechende Anzahl von Zwischenstellungen der Zahnkronen bzw. der Zähne relativ zueinander modelliert. Diese Zwischenstellungen werden nachfolgend als Zwischensituationen bezeichnet. Anschließend wird bei der US 5,975,893 A zumindest für jede Zwischensituation und auch für die Endsituation jeweils ein physisch vorhandenes Modell erzeugt, welches jeweils die Anordnung der Zahnkronen in der Gingiva als ein zusammenhängendes einstückig gefertigtes Stück wiedergibt. Zur Herstellung dieser physisch tatsächlich vorhandenen Modelle wird bei der US 5,975,893 A die Verwendung der an sich bekannten Stereolithografie oder anderer entsprechender Verfahren bzw. Maschinen vorgeschlagen. Letztendlich handelt es sich bei jedem der Modelle für die verschiedenen Zwischensituationen und die Endsituation um einen 3D-Druck aller zu behandelnden Zähne, also in der Regel des gesamten Kiefers, samt Gingiva. In diesen physisch tatsächlich vorhandenen Modellen sind somit alle Zahnkronen einstückig mit der Gingiva verbunden. Mittels jeder dieser Modelle wird dann jeweils eine der verschiedenen, für die Behandlung des jeweiligen Patienten benötigten Zahnschienen hergestellt.

In der Praxis erfolgt die Umsetzung dieses in der US 5,975,893 A beschriebenen Vorgehens in großen industriellen Produktionsstätten, welche mit einer entsprechenden Vielzahl von entsprechend schnellen Geräten für die Stereolithografie oder den sonstigen 3D-Druck ausgestattet sind.

Versucht ein kleineres Zahnlabor das in der US 5,975,893 A beschriebene Vorgehen durchzuführen, um eine Vielzahl von Zahnschienen für die kieferorthopädische Behandlung eines einzelnen Patienten herzustellen, so scheitert dies in der Praxis in der Regel daran, dass die für diesen Labormaßstab finanzierbaren StereolithografieGeräte oder sonstigen 3D-Drucker insgesamt zu langsam arbeiten oder dass die tatsächlich geeigneten Geräte zu teuer sind.

Aufgabe der Erfindung ist es, eine Anordnung der oben genannten Art zur Herstellung von mehreren unterschiedlich ausgeformten Zahnschienen für die kieferorthopädische Behandlung eines Patienten vorzuschlagen, welche relativ zeit- und kostengünstig auch in kleineren Labors die Herstellung einer entsprechenden Vielzahl von Zahnschienen ermöglicht.

Zur Lösung dieses Problems schlägt die Erfindung eine Anordnung gemäß Patentanspruch 1 vor.

Es ist somit bei einer Anordnung der oben genannten Art erfindungsgemäß vorgesehen, dass die Anordnung mehrere Zahnstümpfe aufweist und die Zahnstümpfe jeweils eine Zahnkrone zur Ausformung von Zahnkronenabdrücken in den Zahnschienen aufweisen und die Anordnung zusätzlich mehrere Tragkörper aufweist, wobei jeder der Tragkörper für die, vorzugsweise für jeden der, Zahnstümpfe zumindest einen Adapter zur lösbaren Befestigung des, vorzugsweise jeweiligen, Zahnstumpfes auf dem jeweiligen Tragkörper aufweist.

Die Erfindung ermöglicht es, auf die Herstellung der eingangs genannten physisch tatsächlich vorhandenen Modelle, welche jeweils sowohl alle Zahnstümpfe als auch die Gingiva als ein Stück umfassen, zu verzichten. Anstelle dessen sieht die Erfindung vor, dass die Zahnstümpfe, vorzugsweise jeweils einzeln, mittels entsprechender Adapter auf den Tragkörpern lösbar befestigt werden können. Hierdurch müssen die Zahnstümpfe nur einmal hergestellt werden. Sie können dann jeweils an den unterschiedlichen Tragkörpern befestigt werden, um dann jeweils eine Zahnschiene produzieren zu können. In anderen Worten umfasst die erfindungsgemäße Anordnung somit mehrere Tragkörper und mehrere, vorzugsweise einzelne, Zahnstümpfe, wobei die Zahnstümpfe jeweils über die Adapter an dem jeweiligen Tragkörper lösbar befestigt werden können, um so die Vorlage bzw. das Modell, auf dem die jeweilige Zahnschiene hergestellt werden kann, zu bilden. Die erfindungsgemäße Anordnung kann somit als eine Art Bausatz genutzt werden, um die verschiedenen Zwischensituationen und auch die gewünschte Endsituation der Zahnkronen abzubilden und jeweils darauf eine entsprechende Zahnschiene herzustellen.

Dies kann auch in kleineren Zahnlabors zeit- und kosteneffizient durchgeführt werden. Auf die Herstellung von physisch tatsächlich vorhandenen Modellen bei denen die Zahnkronen einstückig miteinander und auch einstückig mit einer entsprechenden Gingiva-Nachbildung verbunden sind, kann hierdurch verzichtet werden.

Bei den Zahnstümpfen handelt es sich jeweils vorzugsweise um künstliche Nachbildungen jeweils eines Zahnes des zu behandelnden Patienten. Die Zahnstümpfe müssen dabei allerdings mit dem jeweils beim Patienten vorhandenen natürlichen Zahn nur in dem Bereich der Zahnkrone übereinstimmen, welcher zur Ausformung der Zahnkronenabdrücke in den Zahnschienen benötigt wird. Die Zahnwurzel und gegebenenfalls auch ein entsprechend weit von der Okklusionsfläche entfernter Teilbereich der Zahnkrone des jeweiligen Zahnstumpfes müssen nicht zwingend mit dem entsprechenden natürlichen Zahn des zu behandelnden Patienten übereinstimmen, sofern sie bei der Ausformung der Zahnkronenabdrücke in den Zahnschienen nicht relevant sind. Es ist also möglich, den Zahnstumpf außerhalb der Zahnkrone bzw. des davon tatsächlich benötigten Teilbereichs eine einfache geometrische Form zu geben. Im Folgenden wird zur sprachlichen Vereinfachung mit der Zahnkrone des Zahnstumpfes nur der Teilbereich bezeichnet, welcher zur Ausbildung des Zahnkronenabdrucks tatsächlich benötigt wird. Insbesondere an seinem der Zahnkrone gegenüberliegenden Ende kann der Zahnstumpf einen Gegenadapter aufweisen, mit dem er am entsprechenden Adapter des Tragkörpers lösbar befestigt werden kann. Bevorzugt ist vorgesehen, dass der Zahnstumpf zu seinem von der Zahnkrone abgewandten Ende hin verjüngt ausgebildet ist, also in Richtung von der Zahnkrone weg in seiner Querschnittsfläche abnimmt. Hierdurch werden Freiräume geschaffen, die bei der Aufstellung bzw. Befestigung der Zahnstümpfe auf dem jeweiligen Tragkörper für eine sehr flexible Positionierung und Ausrichtung genutzt werden können.

In der Regel ist bei der Erfindung vorgesehen, dass jeder Zahnstumpf einen einzelnen Körper bildet, welcher auch einzeln am jeweiligen Tragkörper befestigt werden kann. Wenn die Position einzelner Zähne im Patientenmund relativ zueinander nicht durch die kieferorthopädische Behandlung geändert werden soll, ist es im Rahmen der Erfindung aber auch möglich, eine gewisse Anzahl von Zahnstümpfen als einstückigen Körper auszubilden. In der Regel ist aber nicht vorgesehen, dass alle Zahnstümpfe als einstückiger Körper ausgebildet sind, da dann ihre Positionierung und/oder Ausrichtung relativ zueinander nicht variiert werden könnte.

Um bei der kieferorthopädischen Behandlung des Patienten die Zähne, deren Stellung korrigiert werden muss, im Laufe der Behandlung in ihrer Ausrichtung und/oder Positionierung zu ändern, muss sich über den Verlauf der nach und nach in den Mund des Patienten einzusetzenden Zahnschienen auch die entsprechende Positionierung und/oder Ausrichtung der Zahnkronenabdrücke relativ zueinander in von Zahnschiene zu Zahnschiene verändern. Um dies mittels der Erfindung abbilden zu können, sehen bevorzugte Varianten vor, dass zumindest einer der, vorzugsweise mehrere der oder alle, Adapter zur voneinander verschiedenen Positionierung und/oder Ausrichtung des, vorzugsweise jeweiligen, Zahnstumpfes auf den verschiedenen Tragkörpern der Anordnung verschieden positioniert und/oder ausgerichtet ist bzw. sind. Die Positionierung und/oder Ausrichtung der Adapter für den jeweiligen Zahnstumpf wird von Tragkörper zu Tragkörper günstigerweise so variiert, dass insgesamt die beim Patienten für den jeweiligen entsprechenden Zahn gewünschte Verschiebung und Neuausrichtung über die verschiedenen Zwischensituationen hinweg abgebildet werden kann.

Bevorzugte Varianten erfindungsgemäßer Anordnungen sehen in anderen Worten vor, dass zumindest einer der, vorzugsweise mehrere der oder alle, Zahnstümpfe, wenn sie mittels der Adapter auf zwei verschiedenen der Tragkörper befestigt sind, relativ zueinander verschiedenartig positioniert und/oder ausgerichtet sind.

Eine erfindungsgemäße Anordnung könnte auch als ein Set bezeichnet werden. Die Adapter könnte man auch als Anschlusselemente oder Interfaces bezeichnen. Die Adapter sind günstigerweise Teil von Steckverbindungen. Bevorzugt bilden sie zusammen mit den jeweiligen Gegenadaptern, welche auch als Gegenanschlusselemente bezeichnet werden könnten, eine Steckverbindung aus. Besonders bevorzugt ermöglichen der jeweilige Adapter des Tragkörpers und der entsprechende Gegenadapter des Zahnstumpfs eine reib- und/oder formschlüssige Verbindung, welche besonders bevorzugt werkzeuglos, also auch ohne die Verwendung von Werkzeug, miteinander verbunden und wieder voneinander getrennt werden kann.

Besonders bevorzugt ist vorgesehen, dass die Zahnstümpfe jeweils zumindest einen Gegenadapter zur Befestigung der Zahnstümpfe mittels der Adapter an den Tragkörpern aufweisen, wobei die Gegenadapter und die Adapter zur Befestigung an und/oder ineinander zueinander korrespondierende Formen aufweisen. Besonders bevorzugt ist dabei vorgesehen, dass der Gegenadapter und der zugeordnete Adapter eine paarweise zueinander korrespondierende Form aufweisen. Hierdurch kann sichergestellt werden, dass jeweils nur ein Gegenadapter mit genau einem Typ von Adapter verbunden werden kann. Dies kann dazu genutzt werden, dass der jeweilige Zahnstumpf immer nur an der richtigen Stelle am jeweiligen Tragkörper befestigt werden kann, indem an dieser Stelle des jeweiligen Tragkörpers ein jeweils eine bestimmte Form aufweisender Adapter angeordnet ist.

In diesem Sinne kann vorgesehen sein, dass die Gegenadapter und die Adapter in ihrer Form und/oder Positionierung zumindest eine Indexierung zur eineindeutigen Befestigung des jeweiligen Gegenadapters und des jeweiligen Adapters an- und/oder ineinander aufweisen. Eine eineindeutige Befestigung kann im mathematischen Sinn auch als eine bijektive Abbildung bezeichnet werden, welche dafür sorgt, dass ein jeweiliger Zahnstumpf nur an jeweils einem Adapter des jeweiligen Tragkörpers befestigt werden kann. Die Indizierung bzw. in anderen Worten die Form von Adapter und Gegenadapter können auch so ausgebildet sein, dass sie eine Verdrehsicherung ergeben. Hierdurch kann sichergestellt werden, dass der mittels des Adapters am jeweiligen Tragkörper befestigte Zahnstumpf nicht verdreht werden kann, solange er am Tragkörper befestigt ist.

Die Adapter können grundsätzlich unterschiedlich ausgeformt werden. Eine einfache Variante sieht vor, dass die Adapter als in den jeweiligen Tragkörper eingebrachte Ausnehmungen, vorzugsweise Sacklöcher oder abgestufte Durchgangslöcher, ausgebildet sind. Diese Ausnehmungen können in einfacher Art und Weise in der jeweils gewünschten Positionierung und/oder Ausrichtung in den Tragkörper Material abtragend eingebracht, vorzugsweise eingebohrt oder eingefräst, sein bzw. werden. Dies ist rasch und kostengünstig auch mit relativ einfachen technischen Hilfsmitteln, wie Bohrern und Fräsern möglich und kann auch im kleineren Labormaßstab einfach schnell und kostengünstig realisiert werden. In der Ausgestaltung als Sacklöcher kann durch das jeweilige Ende bzw. den Boden des Sacklochs als Anschlag die Einstecktiefe vorgegeben werden. In der Ausgestaltung als abgestuftes Durchgangsloch kann die im Durchgangsloch ausgebildete Abstufung bzw. Stufe als Anschlag zur Vorgabe der Einstecktiefe verwendet werden. Die Ausrichtung und Positionierung der jeweiligen Ausnehmung auf dem jeweiligen Tragkörper gibt dann die Ausrichtung und Positionierung des jeweils auf den Tragkörper angeordneten Zahnstumpfes vor. Alternativ kann aber auch vorgesehen sein, dass die Adapter als vom Tragkörper hervorstehende Zapfen ausgebildet sind. Diese Zapfen können wiederum in entsprechende Löcher im Tragkörper eingesteckt werden oder aber auch aus dem Tragkörper, vorzugsweise materialabtragend herausgearbeitet, insbesondere herausgefräst werden oder dergleichen. Auch ein Anschrauben oder Aufbauen mit aufbauendem Verfahren oder dergleichen ist denkbar. Im Falle der Verwendung von aufbauenden Verfahren wie z.B. dem 3D-Drucken zur Herstellung der Tragkörper können die Adapter gleich bei der Herstellung des jeweiligen Tragkörpers mit gefertigt werden. Dies gilt sowohl für Adapter in Form von in dem Tragkörper angeordneten Ausnehmungen als auch für Adapter in Form von als vom Tragkörper hervorstehenden Zapfen. Im Falle von Zapfen können diese mittels eines aufbauenden Verfahrens wie z.B. dem 3D-Drucken aber auch an den jeweils vorab gefertigten bzw. bereits bestehenden Tragkörper angeformt werden.

Die Tragkörper erfindungsgemäßer Anordnungen können grundsätzlich sehr unterschiedlich ausgestaltet sein. Bevorzugt handelt es sich aber um geometrisch relativ einfache Körper. Besonders bevorzugt ist vorgesehen, dass die Tragkörper abgesehen von den Adaptern jeweils plattenförmig ausgebildet sind.

Ein erfindungsgemäßes Verfahren zur Herstellung von mehreren unterschiedlich ausgeformten Zahnschienen für eine kieferorthopädische Behandlung eines Patienten unter Verwendung einer erfindungsgemäßen Anordnung sieht vor, dass zur Herstellung jeder der Zahnschienen jeweils zumindest die folgenden Verfahrensschritte a) bis c) durchgeführt werden:
a) lösbare Befestigung der Zahnstümpfe mittels der Adapter auf einem der Tragkörper und
b) Anordnen eines jeweiligen Zahnschienenrohlings auf den Zahnstümpfen und
c) Ausformung der Zahnschiene mittels Ausformung der Zahnkronenabdrücke der Zahnkronen der Zahnstümpfe in dem jeweiligen Zahnschienenrohling, vorzugsweise mittels eines Tiefziehvorgangs,
und wobei bei der Durchführung der Verfahrensschritte a) bis c) zur Herstellung der jeweiligen Zahnschiene zumindest einer der, vorzugsweise mehrere der oder alle, Zahnstümpfe auf dem jeweiligen Tragkörper in einer anderen Positionierung und/oder Ausrichtung befestigt wird (werden) als bei der Durchführung der Verfahrensschritte a) bis c) zur Herstellung der jeweils anderen Zahnschienen.

Mit dem erfindungsgemäßen Verfahren können somit alle für die kieferorthopädische Behandlung des jeweiligen Patienten benötigten Zahnschienen mit den Tragkörpern und vorzugsweise jeweils denselben Zahnstümpfen der erfindungsgemäßen Anordnung hergestellt werden, indem man nacheinander mit jedem der Tragkörper der Anordnung die Verfahrensschritte a) bis c) ausführt, um so die jeweilige Zahnschiene herzustellen. Hierdurch können Zahnschienen für alle Zwischensituationen, aber auch für die gewünschte Endsituation hergestellt werden. Es ist möglich, dieselben Zahnstümpfe zusammen mit verschiedenen Tragkörpern zu verwenden, um so jeweils die für die jeweilige Zahnschiene vorgesehene Stellung der Zähne des Patienten abzubilden. Bei dem Zahnschienenrohling kann es sich z.B. um eine entsprechende umformbare Kunststoffplatte handeln. Diese kann beispielsweise mittels eines an sich bekannten Tiefziehvorgangs so auf die Zahnkronen der Zahnstümpfe aufgedrückt werden, dass sich in dem Material des Zahnschienenrohlings die Zahnkronenabdrücke der Zahnkronen ausbilden, um so die Zahnschiene auszuformen. Für die Zahnschiene nicht benötigte Bereiche des Zahnschienenrohlings können vorzugsweise nach Ausbildung der Zahnkronenabdrücke entfernt werden. Dies sowie weitere gegebenenfalls benötigte Nachbearbeitungsschritte können zusätzlich zu den oben genannten Verfahrensschritten durchgeführt werden. Um das Entfernen der nicht benötigten Bereiche zu vereinfachen, kann vorgesehen sein, dass die Zahnkronen der Zahnstümpfe jeweils von einer, vorzugsweise als Vertiefung oder Erhebung ausgebildeten, Markierung begrenzt sind.

Zusätzlich zu der erfindungsgemäßen Anordnung und dem erfindungsgemäßen Verfahren sieht die Erfindung auch ein Computerprogramm zur Planung der verschiedenen Tragkörper einer erfindungsgemäßen Anordnung vor, wobei für jeden Tragkörper der Anordnung die Positionierung und Ausrichtung der Adapter in und/oder auf dem jeweiligen Tragkörper anhand der Geometrie der Zahnstümpfe und der gewünschten Positionierung und Ausrichtung der Zahnstümpfe auf diesem Tragkörper berechnet und als Datensatz zur Verfügung gestellt wird. Die gewünschte Positionierung und Ausrichtung der Zahnstümpfe kann dabei, wie beim Stand der Technik und in der US 5,975,893 A beschrieben, für jede Zwischensituation und auch für die Endsituation berechnet werden. Das erfindungsgemäße Computerprogramm kann diese Berechnung der gewünschten Positionierung und Ausrichtung der Zahnstümpfe mit umfassen. Es kann sich aber auch darauf konzentrieren, für jeden Tragkörper der Anordnung nur die Positionierung und Ausrichtung der Adapter in und/oder auf dem jeweiligen Tragkörper zu berechnen und als Datensatz zur Verfügung zu stellen. Dieser Datensatz kann dann dazu verwendet werden, die entsprechenden Adapter im jeweiligen Tragkörper auszubilden. Z.B. und ohne Beschränkung der Allgemeinheit kann der Datensatz dann dazu verwendet werden, an oder in den jeweiligen Tragkörpern die entsprechenden Ausnehmungen oder Zapfen, z.B. mittels der eingangs genannten bzw. an sich bekannten materialabtragenden Verfahren oder auch mittels materialaufbringender Verfahren auszubilden. Das Computerprogramm kann, aber muss nicht, die Ansteuerung der entsprechenden Maschinen mittels des Datensatzes mit umfassen. In anderen Worten kann das Computerprogramm auch so ausgebildet sein, dass es eine entsprechende Bearbeitungsmaschine mittels des Datensatzes so ansteuert, dass die Bearbeitungsmaschine die Adapter im jeweiligen Tragkörper ausbildet.

Weitere Merkmale und Einzelheiten bevorzugter Ausgestaltungsformen der Erfindung werden nachfolgend beispielhaft in der Figurenbeschreibung erläutert. Diese zeigen:
Fig. 1 eine Zahnschiene, welche erfindungsgemäß hergestellt werden kann;
Fig. 2 ein Modell, welches die Zähne und die Gingiva eines Kiefers eines Patienten abbildet;
Fig. 3 eine Hilfszeichnung zur Abbildung der Trennung der Zahnstümpfe voneinander;
Fig. 4 bis 6 drei Tragkörper, auf denen die Adapter für die Zahnstümpfe verschieden positioniert und ausgerichtet sind;
Fig. 7 bis 15 Schnitte entlang der Schnittlinien AA, BB, CC aus den Fig. 4, 5 und 6, wobei jeweils zwei Zahnstümpfe mittels der jeweiligen Adapter an den entsprechenden Tragkörpern befestigt sind, zur Veranschaulichung der erfindungsgemäßen Anordnung und des erfindungsgemäßen Verfahrens;
Fig. 16 bis 19 Darstellungen zu unterschiedlichen Ausgestaltungsformen von Adaptern;
Fig. 20 eine Hilfszeichnung zur Erläuterung von bevorzugt vorgesehenen Markierungen und
Fig. 21 einen Fräsmaschinenhalter, in den die Tragkörper dieses Ausführungsbeispiels eingesetzt werden können, um dann die Adapter in oder an den Tragkörpern auszubilden.

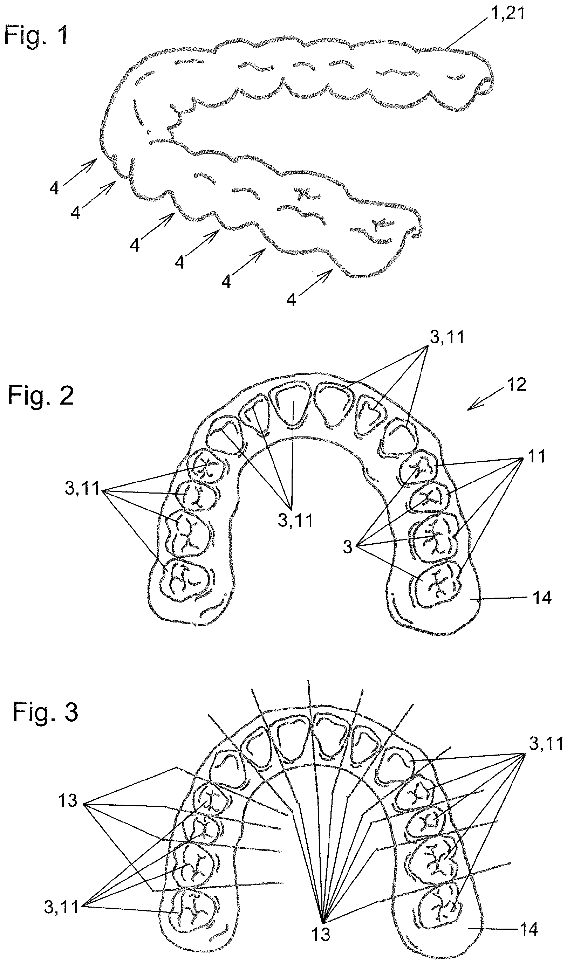

Fig. 1 zeigt beispielhaft eine Zahnschiene 1 in Form eines Endproduktes 21 mit entsprechenden Zahnkronenabdrücken 4, welche jeweils zu einer Zahnkrone 3 der Zähne 11 im Mund des Patienten korrespondieren.

Beim eingangs geschilderten Stand der Technik ist es bekannt, für die kieferorthopädische Behandlung eines jeweiligen Patienten eine Vielzahl solcher Zahnschienen 1, 21 auszubilden, um diese dann im Laufe der Behandlung nacheinander in den Mund des Patienten einzusetzen, um so ausgehend von der Ausgangssituation über mehrere Zwischensituationen mit der Zeit die gewünschte Korrektur der Zahnstellung im Mund des Patienten und damit die Endsituation zu realisieren. Für jede dieser Zwischensituationen und für die Endsituation wird jeweils eine Zahnschiene 1, 21 angefertigt, wobei die Lage der Zahnkronenabdrücke 4 relativ zueinander von Zahnschiene 1,21 zu Zahnschiene 1, 21 verändert wird, um so die Zähne 11 des Patienten nach und nach in die gewünschte Stellung zu bringen. Dies ist bei den beim Stand der Technik bekannten Zahnschienen 1 so. Diese Art der kieferorthopädischen Behandlung mittels einer Vielzahl von Zahnschienen 1 wird auch durch die Erfindung an sich nicht geändert.

Fig. 2 zeigt eine Abbildung der Gingiva 14 eines Patienten mit darin angeordneten Zähnen 11 des Patienten, von denen deren Zahnkronen 3 über die Gingiva 14 überstehen. Dieses Modell 12 gemäß Fig. 2 der Gingiva 14 und der Zähne 11 wird, wie beim Stand der Technik bekannt, zunächst durch einen Scanvorgang digital erzeugt. Dieser Scanvorgang kann direkt im Mund des Patienten oder auch an einem, wie an sich bekannt, hergestellten Abdruck der Situation im Mund des Patienten erfolgen. Der mittels dieses Scanvorgangs erzeugte Datensatz bzw. das durch ihn abgebildete digitale Modell 12 stellt zunächst die Ausgangssituation im Mund des Patienten dar. Basierend hierauf kann, wie beim Stand der Technik bekannt und insbesondere in der US 5,975,893 A geschildert, eine Abfolge von Zwischensituationen und die gewünschte Endsituation jeweils als digitales Modell 12, wie es beispielhaft in Fig. 2 dargestellt ist, berechnet werden. All diese an sich bekannten und im Stand der Technik geschilderten Schritte zur Erstellung der digitalen Datensätze für die Modelle 12 der Zwischensituationen und der gewünschten Endsituation werden durch die Erfindung nicht verändert.

Beim Stand der Technik werden aus all diesen digitalen Modellen 12, also für jede Zwischensituation und auch die Endsituation mittels Stereolithografie oder anderer 3D-Druckverfahren jeweils physisch vorhandene Modelle geschaffen, welches sowohl die Zahnkronen 3 für alle Zähne 11, als auch die Gingiva 14 einstückig als ein Körper miteinander verbindet. Auf dieser Grundlage wird dann beim Stand der Technik mit jedem der physisch vorhandenen Modelle eine Zahnschiene 1 hergestellt.

Wie eingangs bereits erläutert, kann diese beim Stand der Technik vorgeschlagene Vorgehensweise nur im industriellen Maßstab entsprechend schnell und damit kostengünstig durchgeführt werden, wenn entsprechend leistungsfähige Stereolithografiegeräte bzw. 3D-Drucker in einer ausreichenden Anzahl zur Verfügung stehen. In einem einfachen Zahnlabor ist dies in der Regel nicht der Fall.

Um die Herstellung der für die Behandlung eines jeweiligen Patienten benötigten Vielzahl der Zahnschienen 1, 21 auch für ein Zahnlabor wirtschaftlich umsetzbar zu gestalten, wir die erfindungsgemäße Anordnung zur Herstellung von mehreren unterschiedlich ausgeformten Zahnschienen 1 für eine kieferorthopädische Behandlung eines Patienten vorgeschlagen, wobei die Anordnung mehrere Zahnstümpfe 2 aufweist und die Zahnstümpfe 2 jeweils eine Zahnkrone 3 zur Ausformung von Zahnkronenabdrücken 4 in den Zahnschienen 1 aufweisen und wobei die Anordnung zusätzlich mehrere Tragkörper 5 aufweist, wobei jeder Tragkörper 5 für die, vorzugsweise für jeden der, Zahnstümpfe 2 zumindest einen Adapter 6 zur lösbaren Befestigung des, vorzugsweise jeweiligen, Zahnstumpfes 2 auf dem jeweiligen Tragkörper 5 aufweist. Im Gegensatz zum Stand der Technik, bei dem innerhalb eines mittels Stereolithografie oder 3D-Druck hergestellten physisch vorhandenen Modells alle Zähne fix miteinander verbunden sind, werden bei der Erfindung nun Zahnstümpfe 2 mit jeweils daran vorhandenen Zahnkronen 3 hergestellt, welche einzeln, oder höchstens in Gruppen zusammengefasst, erfindungsgemäß mittels der Adapter 6, lösbar an voneinander verschiedenen Tragkörpern 5 befestigt werden können. Für den Fall, dass Gruppen von Zahnstümpfen 2 als miteinander einstückig verbundene Einheiten ausgebildet werden, umfassen diese Gruppen von Zahnstümpfen 2 nie alle zur Herstellung der jeweiligen Zahnschienen 1 benötigten Zahnstümpfe 2. Bevorzugt werden die Zahnstümpfe 2 jeweils als voneinander getrennte Einzelkörper hergestellt. Dies wird in Fig. 3 durch die eingezeichneten Trennlinien 13 symbolisch dargestellt. Die Zahnstümpfe 2 können durch beim Stand der Technik an sich bekannte Mittel hergestellt werden. Ihre jeweilige Zahnkrone 3 muss, wie eingangs erläutert, mit der Zahnkrone 3 des jeweils zugeordneten natürlichen Zahns 11 nur so weit in der Form und Gestaltung übereinstimmen, als dies für die Ausbildung der Zahnkronenabdrücke 4 in den Zahnschienen 1 relevant ist. In Bereichen, welche nicht mit der Zahnschiene 1 in Kontakt kommen, können die künstlich herzustellenden Zahnstümpfe 2 in Form und Gestaltung vom jeweils zugeordneten Zahn 11 des Patienten abweichen, da diese Bereiche für die Ausbildung der Zahnkronenabdrücke 4 in den Zahnschienen 1 nicht relevant sind.

Zusätzlich zu den so hergestellten Zahnstümpfen 2 weist eine erfindungsgemäße Anordnung, wie eingangs bereits erläutert, auch mehrere Tragkörper 5 auf, wobei jeder der Tragkörper 5 für die, vorzugsweise für jeden der, Zahnstümpfe 2 zumindest einen Adapter 6 zur lösbaren Befestigung des, vorzugsweise jeweiligen, Zahnstumpfes 2 auf dem jeweiligen Tragkörper 5 aufweist. In der Regel wird für jede Zahnschiene 1, 21 ein eigener Tragkörper 5 mit entsprechend angeordneten Adaptern 6 geschaffen.

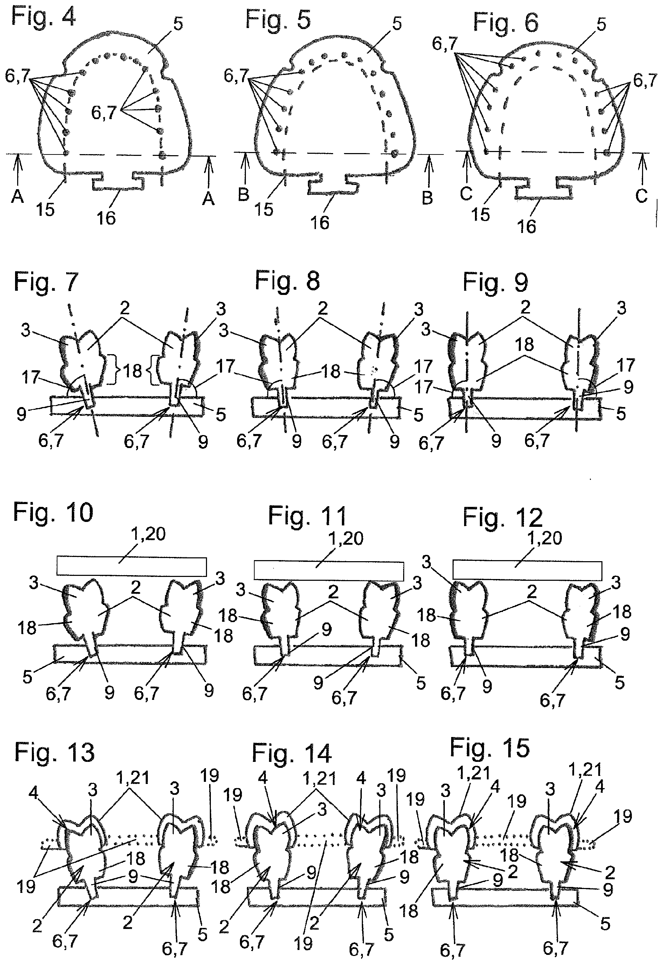

Die Fig. 4, 5 und 6 zeigen beispielhaft jeweils eine Draufsicht auf jeweils einen Tragkörper 5 einer erfindungsgemäßen Anordnung. Die Tragkörper 5 dieses Ausführungsbeispiels sind abgesehen von den Adaptern 6 jeweils plattenförmig ausgebildet. Vergleicht man die Tragkörper 5 der Fig. 4, 5 und 6 miteinander, so sieht man, dass die Adapter 6 zur voneinander verschiedenen Positionierung und/oder Ausrichtung des jeweiligen Zahnstumpfes 2 auf den verschiedenen Tragkörpern 5 der Anordnung verschieden positioniert und/oder ausgerichtet sind. Um dies zu verdeutlichen, ist mit der Linie 15 in allen drei Fig. 4, 5 und 6 der Verlauf eingezeichnet, welcher bei entsprechend an den Adaptern 6 angeordneten Zahnstümpfen 2 der Ausgangssituation der Zähne 11 im Mund des Patienten entspricht. Die in Fig. 4 gewählte Anordnung der Adapter 6 entspricht noch im Wesentlichen dem Verlauf entlang der Linie 15, in den Fig. 5 und 6 sind die Adapter 6 dann jeweils weiter nach außen gesetzt.

Die in Fig. 4, 5 und 6 dargestellten Tragkörper 5 sind beispielhaft ausgewählt aus einer entsprechenden Vielzahl von Tragkörpern 5 einer erfindungsgemäßen Anordnung. Es könnte z.B. so sein, dass Fig. 4 den Tragkörper 5 für die Herstellung einer ersten Zahnschiene 1, 21 für die kieferorthopädische Behandlung eines Patienten darstellt. Fig. 5 zeigt einen Tragkörper für eine von in der Regel vielen Zwischensituationen, sodass die für diese Zwischensituation benötigte Zahnschiene 1, 21 damit produziert werden kann. Fig. 6 könnte dann z.B. der Tragkörper 5 sein, mit dem die Zahnschiene 1 für die gewünschte Endsituation der Zähne 11 des Patienten hergestellt werden kann.

Die Positionierung und Ausrichtung der Adapter 6 in und/oder auf dem jeweiligen Tragkörper 5 kann mit dem erfindungsgemäßen Computerprogramm anhand der Geometrie der Zahnstümpfe 2 und der gewünschten Positionierung und Ausrichtung der Zahnstümpfe 2 auf diesem Tragkörper 5 berechnet und als Datensatz zur Verfügung gestellt werden. Die gewünschte Positionierung und Ausrichtung der Zahnstümpfe 2 für die jeweiligen Zwischensituationen und auch die gewünschte Endsituation kann, wie beim Stand der Technik bekannt, und anhand von Fig. 2 noch einmal kurz erläutert, berechnet werden, sodass hierzu keine weiteren Ausführungen notwendig sind.

Die Fig. 7, 8 und 9 zeigen nun Vertikalschnitte entlang der Schnittlinien AA, BB und CC, wobei zusätzlich jeweils die mittels der Adapter 6 bereits auf dem jeweiligen Tragkörper 5 lösbar befestigten Zahnstümpfe 2, welche in dieser jeweiligen Schnittebene liegen, mit eingezeichnet sind. Fig. 7 entspricht dabei der Situation gemäß dem Schnitt AA aus Fig. 4, Fig. 8 entspricht der Situation gemäß dem Schnitt BB aus Fig. 5 und Fig. 9 entspricht der Situation entlang der Schnittlinie CC aus Fig. 6. Gut zu sehen ist in diesen Figuren, dass die Zahnstümpfe 2 jeweils eine entsprechende Zahnkrone 3 aufweisen. Der Wurzelbereich 18 des jeweiligen Zahnstumpfes 2 ist abweichend von der natürlichen Zahnform in diesen bevorzugten Ausführungsvarianten in Richtung weg von der Zahnkrone 3 verjüngt ausgebildet. Der Durchmesser bzw. die Querschnittsfläche des Zahnstumpfes 2 nimmt im Wurzelbereich 18 des jeweiligen Zahnstumpfes 2, in Richtung von der Krone 3 weg, ab. Am der Zahnkrone 3 gegenüberliegenden Ende weist jeder der Zahnstümpfe 2 in diesem Ausführungsbeispiel einen Gegenadapter 9 auf. Durch Verbindung des Gegenadapters 9 mit dem jeweiligen Adapter 6 des jeweiligen Tragkörpers 5 kann der jeweilige Zahnstumpf 2 lösbar am Tragkörper 5 befestigt werden. In bevorzugten Ausführungsbeispielen wie den hier gezeigten, muss somit nur ein Satz Zahnstümpfe 2 erzeugt werden. Die Zahnstümpfe 2 können dann aufgrund der lösbaren Befestigung an den Adaptern 6 zur Bestückung der verschiedenen Tragkörper 5 der erfindungsgemäßen Anordnung verwendet werden.

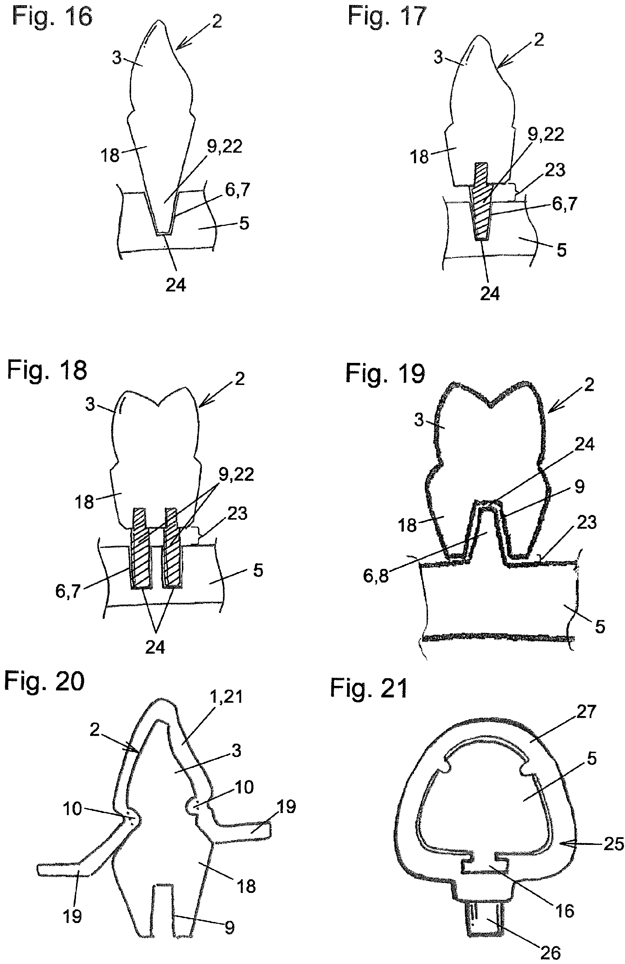

In diesem ersten Ausführungsbeispiel sind die Adapter 6 als Ausnehmungen 7, hier konkret als Sacklöcher, im jeweiligen Tragkörper 5 ausgebildet. Die Gegenadapter 9 sind als entsprechende Stifte ausgeformt. Die Gegenadapter 9 und die Adapter 6 weisen zur Befestigung an- und/oder ineinander, vorzugsweise paarweise, zueinander korrespondierende Formen auf. Verschiedene beispielhaft ausgewählte Möglichkeiten zur Ausgestaltung der Adapter 6 und der Gegenadapter 9 werden weiter unten noch anhand der Fig. 16 bis 19 erläutert.

Beim Vergleich der Fig. 7, 8 und 9 ist gut zu sehen, dass die Zahnstümpfe 2 auf den jeweils verschiedenen Tragkörpern 5 mittels ihrer Adapter 6 relativ zueinander verschiedenartig positioniert und hier auch verschiedenartig ausgerichtet sind, wie dies an den Neigungswinkeln 17 gut zu erkennen ist.

Die Fig. 7, 8 und 9 veranschaulichen somit auch den oben bereits genannten Verfahrensschritt a) der lösbaren Befestigung der Zahnstümpfe 2 mittels der Adapter 6 auf jeweils einem Tragkörper 5 des erfindungsgemäßen Verfahrens zur Herstellung von mehreren unterschiedlich ausgeformten Zahnschienen 1.

Die Fig. 10, 11 und 12 zeigen jeweils den Verfahrensschritt b) und damit das Anordnen eines jeweiligen Zahnschienenrohlings 20 auf den Zahnstümpfen 2. In der hier gezeigten Variante handelt es sich bei den Zahnschienenrohlingen 20 beispielsweise jeweils um eine an sich bekannte Kunststoffplatte, welche mittels eines an sich bekannten Tiefziehprozesses oder anderer geeigneter Verfahren so umgeformt werden kann, dass in ihr die Zahnkronenabdrücke 4 ausgebildet werden. Grundsätzlich sind natürlich auch andere beim Stand der Technik an sich bekannte Umformverfahren zur Ausbildung der Zahnkronenabdrücke 4 im Zahnschienenrohling 20 möglich. Z.B. wäre hier ein thermisches Umformen oder dergleichen zu nennen.

In Fig. 10 entspricht die Positionierung und/oder Ausrichtung der jeweiligen Zahnstümpfe 2 und damit auch die Positionierung und/oder Ausrichtung der jeweiligen Adapter 6 den Situationen gemäß Fig. 7 und 4. Fig. 11 entspricht diesbezüglich den Fig. 8 und 5 und Fig. 12 entspricht diesbezüglich den Fig. 9 und 6.

Ausgehend von den Situationen gemäß Fig. 10, 11 und 12 kann dann jeweils der dritte Verfahrensschritt c) durchgeführt werden. In diesem Verfahrensschritt c) erfolgt jeweils die Ausformung der Zahnkronenabdrücke 4 der Zahnkronen 3 der Zahnstümpfe 2 in dem jeweiligen Zahnschienenrohling 20, sodass hierdurch abgesehen von eventuell notwendigen Nachbearbeitungsschritten die Zahnschienen 1, 21 ausgeformt werden. Diese Ausformung erfolgt günstigerweise durch einen an sich bekannten Tiefziehvorgang oder durch ein anderes beim Stand der Technik an sich bekanntes Umformen der Zahnrohlinge 20. Die Fig. 13, 14 und 15 zeigen beispielhaft die Endergebnisse dieses Verfahrensschrittes c), wobei in Fig. 13 von der Situation gemäß Fig. 10 in Fig. 14 von der Situation gemäß Fig. 11 und in Fig. 15 von der Situation gemäß Fig. 12 ausgegangen wurde. Je nach Ausbildung des Zahnschienenrohlings 20 können zur Herstellung des jeweiligen Endproduktes 21 der jeweiligen Zahnschiene 1 dann noch nicht benötigte Bereiche 19 des Zahnschienenrohlings 20 abgetrennt werden. In den Fig. 13, 14 und 15 sind diese abzutrennende Bereiche 19 gestrichelt dargestellt. Das Abtrennen dieser Bereiche 19 kann z.B. mit einem Fräser oder dergleichen erfolgen. Grundsätzlich ist es natürlich auch möglich, den Zahnschienenrohling 20 bereits so auszuformen, dass es keine abzutrennenden Bereiche 19 gibt. Der Verfahrensschritt des Abtrennens der Bereiche 19 ist somit optional.

Wie dies nun anhand der Fig. 4 bis 15 beispielhaft erläutert wurde, kann unter Verwendung jeweils eines der Tragkörper 5 durch die Abarbeitung der erläuterten Verfahrensschritte jeweils eine Zahnschiene 1 hergestellt werden. Bei der Durchführung der genannten Verfahrensschritte zur Herstellung der jeweiligen Zahnschiene 1 wird bzw. werden jeweils zumindest einer der, vorzugsweise mehrere der oder alle, Zahnstümpfe 2 auf dem jeweiligen Tragkörper 5 in einer anderen Positionierung und/oder Ausrichtung befestigt, als bei der Durchführung der Verfahrensschritte zur Herstellung der jeweils anderen Zahnschiene 1.

Anhand der Fig. 16 bis 19 ist beispielhaft gezeigt, dass für die konkrete Ausgestaltung der Adapter 6 der Tragkörper 5, wie auch der entsprechenden Gegenadapter 9, unterschiedlichste Möglichkeiten bestehen. Darüber hinaus ist beispielhaft in diesen Figuren auch gezeigt, dass natürlich auch die Ausgestaltung der Zahnkronen 3 und der Wurzelbereiche 18 der jeweiligen Zahnstümpfe 2 sehr unterschiedlich sein kann.

In Fig. 16 ist der Adapter 6 als konisch ausgeformte Ausnehmung 7 im Tragkörper 5 ausgebildet. Diese Ausnehmung 7 ist ein Sackloch, dessen unteres Ende als Anschlag 24 für den Gegenadapter 9 ausgebildet ist. Über die Tiefe, Ausrichtung und Positionierung des Adapters 6, also hier in diesem Ausführungsbeispiel gemäß Fig. 16 der Ausnehmung 7 und des Anschlags 24 in Form des Bodens dieser sacklochförmigen Ausnehmung 7 ist die Positionierung und Ausrichtung des Zahnstumpfes 2 vorgegeben bzw. vorgebbar. Die Form des Gegenadapters 9 korrespondiert zu der Form des Adapters 6. In Fig. 16 handelt es sich beim Gegenadapter 9 um einen entsprechend konisch ausgeformten Stift 22, welcher einstückig an den Wurzelbereich 18 des jeweiligen Zahnstumpfs 2 angeformt ist. Fig. 17 zeigt eine ähnliche Ausformungsvariante, bei der der Stift 22 allerdings nicht einstückig am Wurzelbereich 18 sondern zunächst als separater Stift ausgebildet und dann entsprechend am Zahnstumpf 2 bzw. an dessen Wurzelbereich 8 befestigt wurde. Der Zwischenraum 23 zwischen dem unteren Ende des Wurzelbereichs 8 des Zahnstumpfes 2 und der Oberfläche des Tragkörpers 5 lässt sehr unterschiedliche Ausrichtungen des Zahnstumpfes 2 zu, ohne dass dieser mit dem Tragkörper 5 kollidiert. Wie eingangs bereits erläutert, kann vorgesehen sein, dass der Gegenadapter 9 und der Adapter 6 jeweils in ihrer Form und/oder Positionierung zumindest eine Indexierung zur eineindeutigen Befestigung des jeweiligen Gegenadapters 9 und des jeweiligen Adapters 6 an- und/oder ineinander aufweisen. Eine solche Indexierung kann z.B. durch eine gezielt unrunde Form z.B. mit geeigneten Flachstellen und/oder durch Kämme oder dergleichen erreicht werden. Sie kann neben der eindeutigen Zuordnung zwischen Gegenadapter 9 und Adapter 6 auch als Verdrehsicherung genutzt werden.

Eine andere Möglichkeit der Indexierung ist beispielhaft in Fig. 18 gezeigt. Hier sind zwei Adapter 6 und entsprechende Gegenadapter 9 zur lösbaren Befestigung eines einzelnen Zahnstumpfes 2 am Tragkörper 5 vorgesehen. Die beiden Adapter 6 sind dabei als kreiszylinderförmige Ausnehmungen 7 ausgebildet, wie sie z.B. als einfache Bohrlöcher ausgeführt werden können. Die Tiefe dieser Ausnehmungen 7 ergibt auch die Lage der Anschläge 24 vor. Es handelt sich auch hier um sacklochförmige Ausnehmungen 7. Die am Zahnstumpf 2 als Gegenadapter 9 angeordneten Stifte 22 weisen eine entsprechend korrespondierende Form, Anordnung und Ausrichtung auf, sodass zur lösbaren Befestigung des jeweiligen Zahnstumpfes 2 am Tragkörper 5 die Gegenadapter 9 mit den Adaptern 6 verbunden werden können. Wie auch in den anderen bisher gezeigten Ausführungsbeispielen handelt es sich hier um eine einfache Steckverbindung, bei der Adapter 6 und Gegenadapter 9 aneinander form- und reibschlüssig befestigt sind. Eine Indexierung zur eineindeutigen Zuordnung des jeweiligen Zahnstumpfes 2 zum jeweiligen Adapter 6 des jeweiligen Tragkörpers 5 kann hier durch die Lage der beiden Gegenadapter 9 und entsprechend auch der Adapter 6 relativ zueinander erreicht werden. Mit dieser Anordnung ist natürlich auch eine Verdrehsicherung des Zahnstumpfes 2 auf dem Tragkörper 5 gegeben.

Fig. 19 zeigt beispielhaft eine weitere Variante. Hier sind die Adapter 6 als vom Tragkörper 5 abstehende Zapfen 8 ausgebildet. In der gezeigten Variante handelt es sich um konusförmige Zapfen 8. Der Gegenadapter 9 im Zahnstumpf 2 ist hier als entsprechend in ihrer Form korrespondierende Ausnehmung ausgebildet. Über den Anschlag 24 sowie die Position und Ausrichtung des Adapters 6 ist wieder die Lage des Zahnstumpfes 2 auf dem Tragkörper 5 eindeutig vorgegeben. In Fig. 19 ist der Zapfen 8 einstückig an den Tragkörper 5 angeformt. Natürlich könnte es sich bei diesem Zapfen 8 auch um eine Art Stift handeln, welcher in ein entsprechendes Bohrloch im Tragkörper 5 eingesetzt werden könnte. Auch hier kann durch Flachstellen unrunde Formgebung oder dergleichen eine Indexierung zur eineindeutigen Anordnung des jeweiligen Zahnstumpfes 2 auf dem jeweiligen Adapter 6 des Tragkörpers 5 geschaffen werden.

Die Fig. 16 bis 19 zeigen beispielhaft nur einige von vielen möglichen Varianten der Ausgestaltung der Adapter 6 und der entsprechenden Gegenadapter 9.

Um das gegebenenfalls notwendige Abtrennen der in den Fig. 13, 14 und 15 gezeigten Bereiche 19 des Zahnschienenrohlings 20 vom Endprodukt 21 der Zahnschiene 1 zu vereinfachen, können an den Zahnstümpfen 2 jeweils Markierungen 10 ausgebildet werden. Dies ist beispielhaft in Fig. 20 gezeigt. Diese Markierungen 10 können z.B. als Vertiefungen oder als Erhebungen im Zahnstumpf 2 ausgeformt werden, sodass sie sich bei der Herstellung des Endprodukts 21 der Zahnschiene 1 in einfacher Art und Weise im Material des Zahnschienenrohlings 20 abbilden. Die Zahnkronen 3 der Zahnstümpfe 2 können so von der Markierung 10 begrenzt sein. Das Abtrennen der Bereiche 19 kann dann in einfacher Art und Weise z.B. mittels eines Fräskopfes oder dergleichen entlang der jeweiligen Markierung 10 erfolgen.

Fig. 21 zeigt noch einen Fräsmaschinenhalter 25, in den die Tragkörper 5 zur Ausbildung der Adapter 6 eingesetzt werden können. Der Fräsmaschinenhalter weist ein Anschlusselement 26 zum Befestigen in einer an sich bekannten Fräsmaschine auf. Die Tragkörper 5 sind im Rahmen 27 des Fräsmaschinenhalters 25 gehalten. Zur Befestigung der Tragkörper 5 im Fräsmaschinenhalter 25 weisen die hier beispielhaft gezeigten Tragkörper 5 einen Verbindungsfortsatz 16 auf, der in einer entsprechenden Ausnehmung des Fräsmaschinenhalters 25 aufgenommen wird, wenn der jeweilige Tragkörper 5 in den Fräsmaschinenhalter 25 eingesetzt wird. Der Fräsmaschinenhalter 25 sorgt so für eine eindeutige Lage des jeweiligen Tragkörpers 5, sodass die Adapter 6 z.B. mittels Fräsen, Bohren oder dergleichen in den gewünschten Positionen im jeweiligen Tragkörper 5 eingebracht bzw. positioniert und ausgerichtet werden können.

### Legende zu den Hinweisziffern:

- 1: Zahnschiene
- 2: Zahnstumpf
- 3: Zahnkrone
- 4: Zahnkronenabdruck
- 5: Trägerkörper
- 6: Adapter
- 7: Ausnehmung
- 8: Zapfen
- 9: Gegenadapter
- 10: Markierung
- 11: Zahn
- 12: Modell
- 13: Trennlinie
- 14: Gingiva
- 15: Linie
- 16: Verbindungsfortsatz
- 17: Winkel
- 18: Wurzelbereich
- 19: abzutrennender Bereich
- 20: Zahnschienenrohling
- 21: Endprodukt
- 22: Stift
- 23: Zwischenraum
- 24: Anschlag
- 25: Fräsmaschinenhalter
- 26: Anschlusselement
- 27: Rahmen

## Patentansprüche

1. Anordnung zur Herstellung von mehreren unterschiedlich ausgeformten Zahnschienen (1) für eine kieferorthopädische Behandlung eines Patienten, **dadurch gekennzeichnet, dass** die Anordnung mehrere Zahnstümpfe (2) aufweist und die Zahnstümpfe (2) jeweils eine Zahnkrone (3) zur Ausformung von Zahnkronenabdrücken (4) in den Zahnschienen (1) aufweisen und die Anordnung zusätzlich mehrere Tragkörper (5) aufweist, wobei jeder der Tragkörper (5) für die, vorzugsweise für jeden der, Zahnstümpfe (2) zumindest einen Adapter (6) zur lösbaren Befestigung des, vorzugsweise jeweiligen, Zahnstumpfes (2) auf dem jeweiligen Tragkörper (5) aufweist.

2. Anordnung nach Anspruch 1, **dadurch gekennzeichnet, dass** zumindest einer der, vorzugsweise mehrere der oder alle, Adapter (6) zur voneinander verschiedenen Positionierung und/oder Ausrichtung des, vorzugsweise jeweiligen, Zahnstumpfes (2) auf den verschiedenen Tragkörpern (5) der Anordnung verschieden positioniert und/oder ausgerichtet sind.

3. Anordnung nach Anspruch 1 oder 2, **dadurch gekennzeichnet, dass** zumindest einer der, vorzugsweise mehrere der oder alle, Zahnstümpfe (2), wenn sie mittels der Adapter (6) auf zwei verschiedenen der Tragkörper (5) befestigt sind, relativ zueinander verschiedenartig positioniert und/oder ausgerichtet sind.

4. Anordnung nach einem der Ansprüche 1 bis 3, **dadurch gekennzeichnet, dass** die Tragkörper (5) abgesehen von den Adaptern (6) jeweils plattenförmig ausgebildet sind.

5. Anordnung nach einem der Ansprüche 1 bis 4, **dadurch gekennzeichnet, dass** die Adapter (6) als in den jeweiligen Tragkörper (5) eingebrachte Ausnehmungen (7), vorzugsweise Sacklöcher oder abgestufte Durchgangslöcher, oder als vom Tragkörper (5) hervorstehende Zapfen (8) ausgebildet sind.

6. Anordnung nach einem der Ansprüche 1 bis 5, **dadurch gekennzeichnet, dass** die Zahnstümpfe (2) jeweils zumindest einen Gegenadapter (9) zur Befestigung der Zahnstümpfe (2) mittels der Adapter (6) an den Tragkörpern (5) aufweisen, wobei die Gegenadapter (9) und die Adapter (6) zur Befestigung an- und/oder ineinander, vorzugsweise paarweise, zueinander korrespondierende Formen aufweisen.

7. Anordnung nach Anspruch 6, **dadurch gekennzeichnet, dass** die Gegenadapter (9) und die Adapter (6) in ihrer Form und/oder Positionierung zumindest eine Indexierung zur eineindeutigen Befestigung des jeweiligen Gegenadapters (9) und des jeweiligen Adapters (6) an- und/oder ineinander aufweisen.

8. Anordnung nach einem der Ansprüche 1 bis 7, **dadurch gekennzeichnet, dass** die Zahnkronen (3) der Zahnstümpfe (2) jeweils von einer, vorzugsweise als Vertiefung oder Erhebung ausgebildeten, Markierung (10) begrenzt sind.

9. Verfahren zur Herstellung von mehreren unterschiedlich ausgeformten Zahnschienen (1) für eine kieferorthopädische Behandlung eines Patienten mit einer Anordnung nach einem der Ansprüche 1 bis 7,wobei zur Herstellung jeder der Zahnschienen (1) jeweils zumindest die folgenden Verfahrensschritte a) bis c) durchgeführt werden:
a) lösbare Befestigung der Zahnstümpfe (2) mittels der Adapter (6) auf einem der Tragkörper (5) und
b) Anordnen eines jeweiligen Zahnschienenrohlings (20) auf den Zahnstümpfen (2) und
c) Ausformung der Zahnschiene (1) mittels Ausformung der Zahnkronenabdrücke (4) der Zahnkronen (3) der Zahnstümpfe (2) in dem jeweiligen Zahnschienenrohling (20), vorzugsweise mittels eines Tiefziehvorgangs,
und wobei bei der Durchführung der Verfahrensschritte a) bis c) zur Herstellung der jeweiligen Zahnschiene (1) zumindest einer der, vorzugsweise mehrere der oder alle, Zahnstümpfe (2) auf dem jeweiligen Tragkörper (5) in einer anderen Positionierung und/oder Ausrichtung befestigt wird (werden) als bei der Durchführung der Verfahrensschritte a) bis c) zur Herstellung der jeweils anderen Zahnschienen (1).

10. Computerprogramm zur Planung der verschiedenen Tragkörper (5) einer Anordnung nach einem der Ansprüche 1 bis 8, wobei für jeden Tragkörper (5) der Anordnung die Positionierung und Ausrichtung der Adapter (6) in und/oder auf dem jeweiligen Tragkörper (5) anhand der Geometrie der Zahnstümpfe (2) und der gewünschten Positionierung und Ausrichtung der Zahnstümpfe (2) auf diesem Tragkörper (5) berechnet und als Datensatz zur Verfügung gestellt wird.
